# EUROPEAN PATENT SPECIFICATION

(11) **EP 2 867 051 B1**
(45) Date of publication and mention of the grant of the patent: **05.03.2025**
(21) Application number: 13810282.7
(22) Date of filing: 26.06.2013
(51) Int. Cl.: B60K 6/48, H02K 49/00, H02P 15/00, B60W 20/50, B60K 6/365

(54) **DRIVE SYSTEM AND METHOD OF DRIVING A VEHICLE**
ANTRIEBSSYSTEM UND VERFAHREN ZUM ANTRIEB EINES FAHRZEUGS
SYSTÈME ET PROCÉDÉ D'ENTRAÎNEMENT D'UN VÉHICULE

(30) Priority: 27.06.2012 SE 1250705
(43) Date of publication of application: 06.05.2015
(73) Proprietor: Scania CV AB, 151 87 Södertälje (SE)
(72) Inventor: VÅGSTEDT, Nils-Gunnar, S-187 74 Täby (SE); PETTERSSON, Niklas, S-117 27 Stockholm (SE); BERGQUIST, Mikael, S-141 69 Huddinge (SE)
(74) Representative: Scania CV AB
(86) International application number: PCT/SE2013/050781
(87) International publication number: WO 2014/003662

(56) References cited:
- EP-A2- 0 710 787
- EP-A2- 0 889 577
- DE-A1- 10 015 912
- JP-A- H11 332 007
- US-A1- 2009 015 023
- US-A1- 2010 113 202
- US-A1- 2010 173 746
- US-B1- 6 428 438

## Description

### BACKGROUND OF THE INVENTION AND PRIOR ART

The present invention concerns a drive system and a method of driving a vehicle.

To use a conventional clutch mechanism which disconnects the input shaft of the gear box from the combustion engine during gear changing processes in the gear box involves disadvantages. When a stationary vehicle starts, the discs of the clutch mechanism slide against each other. Thereby heating of the discs is provided. This heating results in an increased fuel consumption and a wear of the clutch discs. A conventional clutch mechanism is also relatively heavy and expensive. It occupies also a relatively large space in the vehicle. To use a hydraulic moment converter also results in losses.

Hybrid vehicles can be driven by a primary motor which can be a combustion engine and a secondary motor which can be an electric machine. The electric machine is equipped with at least one energy storage for storing electric energy and control equipment for controlling the flow of electric energy between the energy storage and the electric machine. The electric machine can thereby alternately work as motor and generator in dependence on the operation state of the vehicle. When the vehicle is braked, the electric machine generates electric energy which is stored in the energy storage. The stored electric energy is used later, for example, for driving the vehicle and operating different auxiliary systems in the vehicle.

The Swedish patent application SE 1051384-4, which has not been made public, shows a hybrid drive system with a planetary gear which comprises three components, namely a sun wheel, a planet wheel holder and a ring wheel. One of the three components of the planetary gear is connected to an output shaft of the combustion engine, a second component of the planetary gear is connected to an input shaft to the gear box and a third component of the planetary gear is connected to a rotor of an electric machine. The electric machine is connected to an energy storage such that it alternately can work as motor and generator. The rotation speed of electric machines can be controlled in a stepless manner. By controlling the rotation speed of the electric machine, the input shaft to the gear box can be given a desired rotation speed. With a hybrid system according to SE 1051384-4 no clutch mechanism needs to be used in the drive line of the vehicle.

With a hybrid system according to SE 1051384-4 no clutch mechanism needs to be used in the drive line of the vehicle. The hybrid drive system is however dependent on that the hybrid battery functions in order to make it possible to start the vehicle.

US 2010/0113202 shows a power system including an engine and an electric motor connected to an input shaft of a transmission via a planetary gear. The electric motor may be connected to a battery or a resistive grid.

### SUMMARY OF THE INVENTION

The object of the present invention is to provide a drive system for a vehicle of the initially mentioned kind, where it essentially always is possible to start the vehicle.

This object is achieved with a drive system according to claim 1.

When the combustion engine is starting, a first of the components of the planetary gear rotates with the idle running rotation speed of the combustion engine. The second of the components of the planetary gear which is connected to the gear box is at rest as long as the vehicle is stationary. The third of the components of the planetary gear which is connected to the rotor of the electric machine rotates backwards with a negative rotation speed. In order for a driving moment to be transferred from the combustion engine to the gear box, it is required that the rotor of the electric machine provides a braking moment. According to the invention, the electric machine is connected to an electric circuit with a resistor. Thereby a resistance is created which brakes the rotor and the third component of the planetary gear. Because of this, a driving moment can be transferred to the gear box which results in that the vehicle starts. Such an electric circuit with a resistor constitute simple components which to a relatively low cost can be applied in the vehicle.

According to an embodiment of the present invention, the electric circuit comprises a variable resistor. With such a component, the electric resistance can be varied and thereby the braking moment with which the rotor is braked. A control unit may with advantage control the variable resistor such that the vehicle obtains a desired speed increase during a starting process of the vehicle. The starting process can be defined as the time it takes for the vehicle to obtain a speed such that a higher gear can be engaged in the gear box. Alternatively, the starting process can be defined as a time period and can be in the order of 1 to 3 seconds or another suitable time period.

According to an embodiment of the present invention, the drive system comprises a motor control function, wherein a control unit is adapted to control the combustion engine with the help of the motor control function at operation occasions when gears are shifted in the vehicle. After that the starting process has ended, the rotor of the electric machine obtains a positive rotation speed. It is thereby no longer possible to use the electric circuit with the resistor for supplying a driving moment to the input shaft of the gear box. With information about the speed of the vehicle and the actual gear in the gear box, the control unit can calculate the rotation speed with which the output shaft of the combustion engine is to rotate in order to create a momentless state in the gear box. The control unit thereafter controls the motor control function such that the combustion engine obtains the calculated rotation speed, after which the actual gear in the gear box is disengaged. When a new gear is to be engaged in the gear box, the control unit calculates, with knowledge of the speed of the vehicle and the new gear, the rotation speed of the combustion engine at which the new gear can be engaged. The control unit thereafter controls the motor control function such that the combustion engine obtains the calculated rotation speed, after which the new gear is engaged.

The drive system comprises an energy storage which is connectable to the electric machine such that it is possible to store and consume, respectively, electric energy at different operation conditions of the vehicle. In this case, the vehicle is a hybrid vehicle which is driven by a primary motor in the form of a combustion engine and a secondary motor in the form of said electric machine. Except for the energy storage, the vehicle comprises control equipment in order to control the flow of electric energy between the energy storage and the electric machine. The electric machine has thereby, in addition to the function to enable the control of the rotation speed of the input shaft of the gear box, also the ability to alternately work as motor and generator in dependence on the operation state of the vehicle.

The energy storage is used for braking the rotor such that a driving moment can be transferred from the combustion engine to the gear box at the start of the vehicle. The braking energy which acts on the rotor is generated as electric energy in the energy storage. If the energy storage is estimated to be out of operation, the vehicle cannot start. The electric machine is connected to the electric circuit and the resistor. Thereby the vehicle can start and be driven to a service place or the like where it is possible to repair or exchange the energy storage.

According to another preferred embodiment of the invention, the control unit is adapted to receive information concerning a parameter in order to determine if the energy storage has an undesired function. The control unit may, for example, receive information from an electric measurement instrument which measures a parameter which is related to the electric energy which is led between the regular energy storage and the electric machine. The electric measurement instrument may measure a parameter which concerns the current and/or voltage of the electric energy. If the energy storage does substantially not deliver or receive electric energy during operation, it probably has an undesired function.

According to the invention, the drive system comprises an indication member which indicates when the energy storage has an undesired function. The indication member can be a warning lamp or a sound alarm which is activated if the energy storage does not function. With the help of such an indication member, the driver becomes immediately informed that the energy storage does not function. According to the invention, the driver manually sets the electric switch with a button or the like when the indication member indicates that the energy storage has an undesired function.

According to another preferred embodiment of the invention, the output shaft of the combustion engine is connected to the sun wheel of the planetary gear, the input shaft of the gear box is connected to the planet wheel holder of the planetary gear and the rotor of the electric machine is connected to the ring wheel of the planetary gear. With such a design, the included components may be given a compact construction. The sun wheel and the planet wheel holder may be connected to the output shaft of the combustion engine and the input shaft of the gear box, respectively, with the help of spline joints or the like. It is thereby guaranteed that the sun wheel rotates with the same rotation speed as the output shaft of the combustion engine and that the planet wheel holder rotates with the same rotation speed as the input shaft of the gear box.

The rotor of the electric machine may be fixedly arranged on an external peripheral surface of the ring wheel. The internal peripheral surface of the ring wheel is normally provided with cogs. The external peripheral surface of the ring wheel is normally smooth and very well suited for carrying the rotor of the electric machine. The ring wheel and the rotor of the electric machine thereby form a rotatable unit. Alternatively, the rotor of the electric machine may be connected to the ring wheel via a transmission. It is however possible to connect the output shaft of the combustion engine, the input shaft of the gear box and the rotor of the electric machine with any of the other components of the planetary gear.

The initially mentioned object is achieved also by the method according to claims 6 to 11.

### SHORT DESCRIPTION OF THE DRAWINGS

In the following preferred embodiments of the invention are described, as examples, with reference to the annexed drawings, on which:
- Fig. 1: shows a drive line of a vehicle with a drive system according to the present invention,
- Fig. 2: shows the drive system in more detail,
- Fig. 3: shows how the rotation speed of the different components in the planetary gear may vary at a starting process of the vehicle,
- Fig. 4: shows how the moment of the different components in the planetary gear may vary at a starting process of the vehicle and
- Fig. 5: shows a drive system without energy storage, which does not fall under the scope of the appended claims.

### DETAILED DESCRIPTION OF PREFERRED EMBODIMENTS OF THE INVENTION

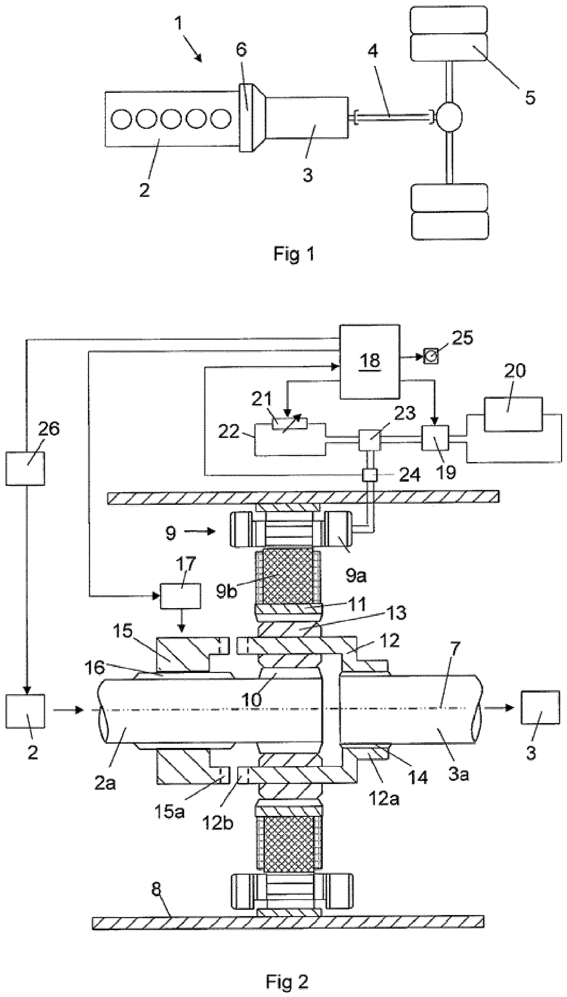

Fig 1 shows a drive line for a heavy vehicle 1. The drive line comprises a combustion engine 2, a gear box 3, a number of drive shafts 4 and drive wheels 5. An intermediate part 6 is arranged between the combustion engine 2 and the gear box 3. The intermediate part 6 is shown in more detail in Fig. 2. The intermediate part 6 comprises an output shaft 2a of the combustion engine 2 and an input shaft 3a of the gear box 3.

The output shaft 2a of the combustion engine is coaxially arranged in relation to the input shaft 3a of the gear box. The output shaft 2a of the combustion engine and the input shaft 3a of the gear box are rotatably arranged around a common axis of rotation 7. The intermediate part 6 comprises a housing 8 which encloses an electric machine 9 and a planetary gear. The electric machine 9 comprises in a customary manner a stator 9a and a rotor 9b. The stator 9a comprises a stator core which is attached in a suitable manner on the inside of the housing 8. The stator core comprises the windings of the stator. The electric machine 9 is adapted to during certain operation occasions use stored electric energy for supplying drive power to the input shaft 3a of the gear box and to during other operation occasions use the kinetic energy of the input shaft 3 of the gear box for extracting and storing electric energy.

The planetary gear is arranged substantially radially inside of the stator 9a and rotor 9b of the electric machine. The planetary gear comprises in a conventional manner a sun wheel 10, a ring wheel 11 and a planet wheel holder 12. The planet wheel holder 12 carries a number of cog wheels 13 which are rotatably arranged in a radial space between the cogs of the sun wheel 10 and the ring wheel 11. The sun wheel 10 is attached on a peripheral surface of the output shaft 2a of the combustion engine. The sun wheel 10 and the output shaft 2a of the combustion engine rotate as a unit with a first rotation speed n₁. The planet wheel holder 12 comprises an attachment portion 12a which is attached on a peripheral surface of the input shaft 3a of the gear box with the help of a spline joint 14. With the help of this joint, the planet wheel holder 12 and the input shaft 3a of the gear box can rotate as a unit with a second rotation speed n₂. The ring wheel 11 comprises an external peripheral surface on which the rotor 9b is fixedly mounted. The rotor 9b and the ring wheel 11 constitute a rotatable unit which rotates with a third rotation speed n₃.

The vehicle comprises a locking mechanism which is movable between a first open position in which the three components 10-12 of the planetary gear are allowed to rotate with different rotation speeds and a second locked position in which it locks together two of the components 10, 12 of the planetary gear such that the three components 10-12 of the planetary gear rotate with the same rotation speed. In this embodiment, the locking mechanism comprises a displaceable coupling member 15. The coupling member 15 is attached on the output shaft 2a of the combustion engine with the help of a spline joint 16. The coupling member 15 is in this case arranged, secured against turning, on the output shaft 2a of the combustion engine and displaceably arranged in an axial direction on the output shaft 2a of the combustion engine. The coupling member 15 comprises a coupling portion 15a which is connectable to a coupling portion 12b of the planet wheel holder 12. The locking mechanism comprises a schematically shown displacement member 17 is adapted to displace the coupling member 15 between the first free position I₁ when the coupling portions 15a, 12b are not in engagement with each other and the second locked position I₂ when the coupling portions 15a, 12b are in engagement with each other. In the first open position, the output shaft 2 of the combustion engine and the input shaft 3 of the gear box can rotate with different rotation speeds. When the coupling portions 15a, 12b are in engagement with each other, the output shaft 2 of the combustion engine and the input shaft 3 of the gear box will rotate with the same rotation speed.

An electric control unit 18 is adapted to control the displacement member 17. The control unit 18 is also adapted to decide at which occasions the electric machine is to work as motor and at which occasions it is to work as generator. In order to decide this, the control unit 18 can receive actual information from suitable operation parameters. The control unit 18 can be a computer with a suitable software for this purpose. The control unit 18 can of course constitute one or more separate control units. The control unit 18 also controls a schematically shown control equipment 19 which controls the flow of electric energy between an energy storage 20 and the stator 9a of the electric machine. At occasions when the electric machine 9 works as motor, stored electric energy from the energy storage 20 is supplied to the stator 9a. At occasions when the electric machine works as generator, electric energy from the stator 9a is supplied to the energy storage 20. The energy storage 20 delivers and stores electric energy with a voltage which is in the order of 200-800 Volt. Since the intermediate part 6 between the combustion engine 2 and the gear box 3 in a vehicle is limited, it is required that the electric machine and the planetary gear constitute a compact unit. The components 10-12 of the planetary gear are here arranged substantially radially inside of the stator 9a of the electric machine. The rotor 9b of the electric machine, the ring wheel 11 of the planetary gear, the output shaft 2a of the combustion engine and the input shaft 3a of the gear box are here rotatably arranged around a common axis of rotation 5. With such a design, the electric machine 9 and the planetary gear occupy a relatively small space. The vehicle comprises an electric circuit 21 with a variable resistor 22. The electric circuit 21 is connectable to the stator 9a of the electric machine via an electric switch 23.

During the operation of the electric machine 9, the control unit 18 receives information from an electric meter 24 which senses a parameter which is related to the electric energy which is transported to and from the energy storage 20. If the measured electric energy is below an expected value, the energy storage 20 does probably not function in the intended manner. If substantially no electric energy is transported to and from the energy storage 20 during the operation of the vehicle, it is estimated to be out of operation. If the control unit 18 estimates that the energy storage 20 is out of operation, it activates an indication member 25 in the driver's cab. The indication member 25 may be a flashing lamp or a sound alarm of the like. The task of the indication member 25 is to make the driver aware of the fact that the energy storage 20 is out of operation. The driver manually activates with a button or the like the connection between the electric circuit 21 with the variable resistor 22 and the electric machine 9. The vehicle 1 is equipped with a motor control function 26 with which the rotation speed n₁ of the combustion engine 2 can be controlled. The control unit 18 thereby has the possibility to activate the motor control function 26 when gears are engaged and disengaged in the gear box 3 in order to create a momentless state in the gear box 3.

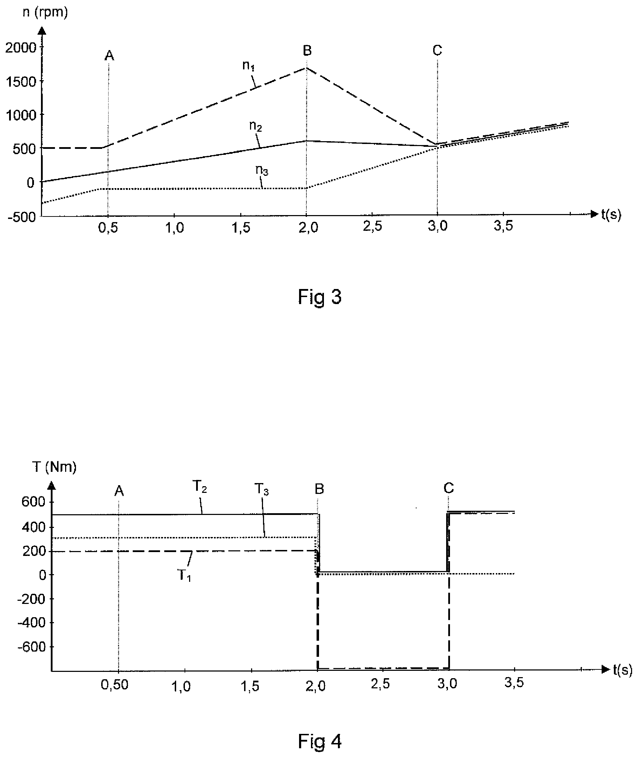

Fig. 3 and 4 show an example of how the rotation speed n and the moment T may vary with time t for the output shaft 2a of the combustion engine, the rotor 9b of the electric machine and the input shaft 3a of the gear box during a starting process of the vehicle 1 when the energy storage 20 is out of operation. Rotation speed n₁ and moment T₁ of the output shaft 2a of the combustion engine are shown with dashed lines, rotation speed n₂ and moment T₂ of the input shaft 3 of the gear box are shown with continuous lines and rotation speed n₃ and moment T₃ of the electric machine 9 are shown with dotted lines. The relationship between the number of cogs z₁ of the sun wheel 9 and the number of cogs z₂ of the ring wheel 10 is in this example z₁/z₂ = 0.7.

If the energy storage 20 is estimated to be out of operation, the driver sets the electric switch 23 in the position in which the electric circuit 21 with the variable resistor 22 is connected to the electric machine 9. The combustion engine 2 starts at the time t = 0. The combustion engine 2 runs initially idle with the rotation speed n₁ = 500 rpm and the torque T₁ = 200 Nm. The input shaft 3a of the gear box is at rest and has thus initially the rotation speed n₂ = 0 rpm. Since all the components in the planetary gear are connected to each other with a predetermined transmission ratio, the ring wheel 11 obtains an initial rotation speed n₃ which is determined by the two other rotation speeds n₁, n₂. With the above transmission ratio z₁/z₂ = 0.7, the ring wheel obtains the rotation speed n₃ = -350 rpm. The ring wheel 11 will here rotate in an opposite direction in relation to the sun wheel 10.

The control unit 18 thereafter controls the variable resistor such that the electric machine 9 provides a braking moment T₃ which in this case is 300 Nm. Since the ring wheel 11 rotates in the opposite direction in relation to the sun wheel 10, this braking moment T₃ is supplied to the input shaft 3a of the gear box. The input shaft of the gear box here obtains a driving moment which is the sum of the moment T₁ of the output shaft of the combustion engine and the braking moment T₃ of the ring wheel. The input shaft 3a of the gear box here obtains the driving moment T₂ = 500 Nm. The driving moment T₂ gets the input shaft 3a of the gear box going such that it starts to rotate, i.e. n₂ becomes larger than zero. Thereby the opposite rotation speed n₃ of the ring wheel is simultaneously reduced.

At the time A, the rotation speed n₁ of the combustion engine is increased. Thereby it is ensured that the ring wheel 11 can rotate with an opposite rotation speed n₃ of a suitable magnitude such that it also thereafter can put a load on the combustion engine 2 and ensure that the input shaft 3a of the gear box obtains an increasing rotation speed n₂ and the vehicle 1 a successively increasing speed until the time B. The speed of the vehicle increases linearly up to the time B. The moments T₁, T₂, T₃ present constant values during the whole starting process up to the time B. At the time B, the combustion engine 2 is braked with an exhaust brake, a controllable turbo or is retarded in another manner such that the rotation speed n₁ is reduced. The rotation speed n₁ of the combustion engine 2 sinks at the same time as the input shaft 3a of the gear box maintains a constant rotation speed n₂. The control unit 18 disconnects the electric machine 9 from the electric circuit 22 with the resistor 21. The vehicle 1 is now driven with a constant speed. When the rotation speed n₁ of the combustion engine 2 sinks at the same time as the rotation speed n₂ of the gear box is constant, the rotation speed n₃ of the electric machine 9 increases. The rotation speed n₃ of the rotor changes from being a negative rotation speed to a positive rotation speed. At the time C all components in the planetary gear rotate with the same rotation speed. The control unit 18 activates the displacement member 17 which displaces the coupling member 15 such that the coupling portions 15a, 12b get into engagement with each other. The output shaft 2 of the combustion engine and the input shaft 3 of the gear box are now locked in relation to each other and will thereby rotate with the same rotation speed. After that the components included in the planetary gear have been locked, only the combustion engine 2 is responsible for driving the vehicle 1. The electric machine 9 rotates with the same rotation speed n₃ as the output shaft 2 of the combustion engine and the input shaft 3 of the gear box.

At the continued journey, a higher gear needs to be engaged in the gear box 3. The control unit 18 activates the displacement member 17 which displaces the coupling member 15 to a disengaged position. The connection between the output shaft 2 of the combustion engine and the input shaft 3 of the gear box ceases. The control unit 18 calculates the rotation speed n₁ which the input shaft 2a of the combustion engine needs to be driven with in order to achieve a momentless state in the gear box 3. The control unit 18 activates the motor control function 26 which gives the combustion engine 2 the calculated rotation speed n₁, after which the gear is disengaged. After that the gear has been disengaged, a new gear is to be engaged. The control unit 18 calculates here the rotation speed n₁ which the output shaft 2 of the combustion engine needs to be driven with in order for it to rotate with the same rotation speed as the input shaft 3a of the gear box. The control unit 18 activates the motor control function 26 which gives the combustion engine 2 the calculated rotation speed n₁, after which the new gear is engaged. The control unit 18 thereafter activates the motor control function 26 again in order to control the rotation speed n₁ such that all the components in the planetary gear obtain the same rotation speed n₁, n₂, n₃. When all the components in the planetary gear rotate with the same rotation speed, the control unit 18 activates the displacement member 17 which displaces the coupling member 15 such that the coupling portions 15a, 12b get into engagement with each other. After locking the planetary gear, only the combustion engine 2 is responsible for driving the vehicle.

In this case an electric circuit 21 with a variable resistor 22 is used instead of the energy storage 20 and an electric machine in order to brake the rotor 9b during a starting process of the vehicle 1. The vehicle 1 can thereby be started even if the energy storage is out of operation and can be driven to a service place or the like where the energy storage 20 can be exchanged or repaired.

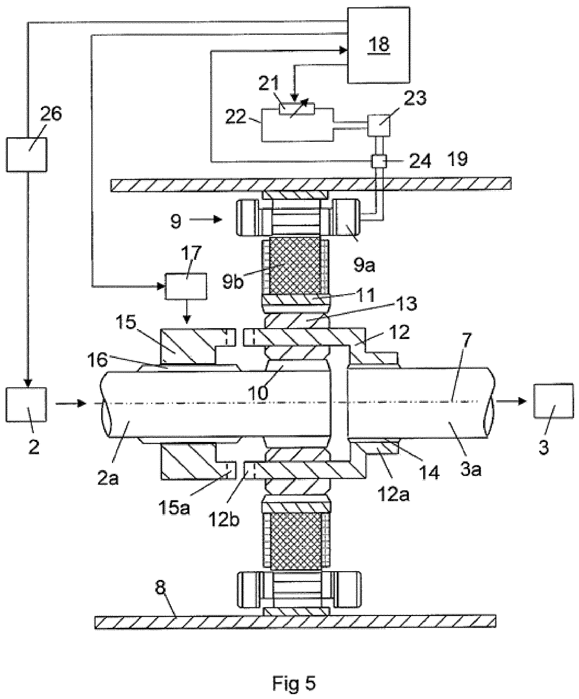

Fig. 5 shows a drive system not falling under the scope of the appended claims, in which, the vehicle does not comprise any energy storage. Except for that, the drive system comprises the same components as in the embodiment in Fig. 2. The planetary gear, the electric machine and the electric circuit 22 with the resistor 21 here replace a conventional clutch mechanism. In this case, the vehicle 1 is always started with the help of the electric circuit 22 and the resistor 21, after which the motor control function 26 is used when gears are shifted in the vehicle. Alternatively, gear shifting can be performed in the following manner. Since the resistor 21 only works as a load, the possibility to change direction of the moment of the electric machine is lost when no energy storage is used. It can be remedied by giving the combustion engine a higher initial rotation speed before a gear shifting process is performed. The rotary speed is then successively reduced in a downward direction towards the idle speed when it is loaded by the electric machine by means of the resistor 20. During the way down to the idle speed, a synchronous rotation speed is obtained between the combustion engine and the input shaft of the gear box. When this occurs, the gear is pushed in whereupon the rotation speed of the engine in increased such as during a normal acceleration of the vehicle.

The invention is in no way limited to the embodiment described on the drawings but can be varied freely within the scope of the claims. A transmission with a gear ratio can also be arranged between the rotor 9 and the ring wheel 11. The rotor 9 and the ring wheel 11 need thus not rotate with the same rotation speed.

## Claims

1. Drive system for a vehicle (1), wherein the drive system comprises a combustion engine (2) with an output shaft (2a), a gear box (3) with an input shaft (3a), an electric machine (9) which comprises a stator (9a) and a rotor (9b), and a planetary gear which comprises a sun wheel (10), a ring wheel (11) and a planet wheel holder (12) and a hybrid energy storage (20) which is connectable to the electric machine (9) such that it is possible to store and consume, respectively, electric energy at different operation conditions of the vehicle (1), wherein the output shaft (2a) of the combustion engine is connected to a first of said components of the planetary gear such that a rotation of this shaft (2a) leads to a rotation of this component, wherein the input shaft (3a) of the gear box is connected to a second of said components of the planetary gear such that a rotation of this shaft leads to a rotation of this component and the rotor (9b) of the electric machine is connected to a third of said components of the planetary gear such that a rotation of the rotor (9b) leads to a rotation of this component, wherein the drive system comprises an electric circuit (21) with a resistor (22) and an electric switch (23) with which the electric machine (9) is connectable to the electric circuit (21) and the resistor (22), **characterized in that** that the electric switch (23) is configured to be manually moved to a position in which it connects the electric circuit (21) to the electric machine during a starting process of the vehicle (1) when the hybrid energy storage (20) is estimated to have an undesired function, the drive system comprising an indication member (25) which indicates when the hybrid energy storage (20) is estimated to have an undesired function.

2. Drive system according to claim 1 wherein the electric circuit (21) comprises a variable resistor (22).

3. Drive system according to claim 2, wherein the control unit (18) is adapted to control the variable resistor (22) such that the vehicle provides a desired speed increase during a starting process of the vehicle (1).

4. Drive system according to any of the preceding claims, wherein the drive system comprises a motor control function (26) and a control unit (18) which is adapted to control the combustion engine (1) with the help of the motor control function (26) at operation occasions when gears are shifted in the vehicle (1).

5. Drive system according to any of the preceding claims, wherein, the output shaft (2a) of the combustion engine is connected to the sun wheel (10) of the planetary gear, that the input shaft (3a) of the gear box is connected to the planet wheel holder (12) of the planetary gear and that the rotor (9b) of the electric machine is connected to the ring wheel (11) of the planetary gear.

6. Method of driving a vehicle (1), wherein the vehicle (1) comprises a combustion engine (2) with an output shaft (2a), a gear box (3) with an input shaft (3a), an electric machine (9) which comprises a stator (9a) and a rotor (9b), and a planetary gear which comprises a sun wheel (10), a ring wheel (11) and a planet wheel holder (12) and a hybrid energy storage (20) which is connectable to the electric machine (9) such that it is possible to store and consume, respectively, electric energy at different operation conditions of the vehicle (1), wherein the output shaft (2a) of the combustion engine is connected to a first of said components of the planetary gear such that a rotation of this shaft (2a) leads to a rotation of this component, wherein the input shaft (3a) of the gear box is connected to a second of said components of the planetary gear such that a rotation of this shaft leads to a rotation of this component and the rotor (9b) of the electric machine is connected to a third of said components of the planetary gear such that a rotation of the rotor (9b) leads to a rotation of this component, said method comprising connecting the electric machine to a hybrid energy storage (20) such that it is possible to store and consume, respectively, electric energy at different operation conditions of the vehicle_(1), **characterized in that** the method further comprises the step of indicating to a driver of the vehicle (1) via an indication member (25), when the hybrid energy storage (20) is estimated to have an undesired function, and the step of connecting, upon manual actuation of the driver, the electric machine (9) to an electric circuit (21) which comprises a resistor (22) during at least a starting process of the vehicle (1) when the hybrid energy storage (20) is estimated to have an undesired function.

7. Method according to claim 6, comprising the step to connect, upon manual actuation of the driver, the electric machine (9) to an electric circuit (21) which comprises a variable resistor (22).

8. Method according to claim 7, comprising the step to control the variable resistor (22) such that it provides a resistance which gives the vehicle a desired speed increase during a starting process of the vehicle (1).

9. Method according to any of claims 6-8, comprising the step to control the rotation speed of the combustion engine (1) at operation occasions when gears are shifted in the vehicle (1).

10. Method according to any of the preceding claims 6-9, comprising the step to receive information concerning a parameter in order to determine if the hybrid energy storage (20) has an undesired function.

11. Method according to any of the preceding claims 6-10, comprising the steps to connect the output shaft (2) of the combustion engine to the sun wheel (9) of the planetary gear, to connect the input shaft (3) of the gear box to the planet wheel holder (11) of the planetary gear and to connect the rotor (8) of the electric machine to the ring wheel (10) of the planetary gear.

12. Computer program comprising computer program code configured to carry out a method according to any of claims 6-11 when the computer program code is executed in a drive system according to any of claims 1 to 5.

13. Computer program product comprising a data storage medium which is readable by a computer, wherein the computer program code of a computer program according to claim 12 is stored on the data storage medium.

14. Vehicle comprising a drive system according to any of the claims 1-5.

## Patentansprüche

1. Antriebssystem für ein Fahrzeug (1), wobei das Antriebssystem einen Verbrennungsmotor (2) mit einer Ausgangswelle (2a), ein Getriebe (3) mit einer Eingangswelle (3a), eine elektrische Maschine (9), die einen Stator (9a) und einen Rotor (9b) umfasst, und ein Planetengetriebe, das ein Sonnenrad (10), ein Ringrad (11) und einen Planetenradhalter (12) umfasst, und einen hybriden Energiespeicher (20) umfasst, der mit der elektrischen Maschine (9) verbunden werden kann, so dass es möglich ist, elektrische Energie bei unterschiedlichen Betriebsbedingungen des Fahrzeugs (1) zu speichern bzw. zu verbrauchen, wobei die Ausgangswelle (2a) des Verbrennungsmotors mit einer ersten der Komponenten des Planetengetriebes verbunden ist, so dass eine Drehung dieser Welle (2a) zu einer Drehung dieser Komponente führt, wobei die Eingangswelle (3a) des mit einer zweiten der genannten Komponenten des Planetengetriebes verbunden ist, so dass eine Drehung dieser Welle zu einer Drehung dieser Komponente führt, und der Rotor (9b) der elektrischen Maschine mit einer dritten der genannten Komponenten des Planetengetriebes verbunden ist, so dass eine Drehung des Rotors (9b) zu einer Drehung dieser Komponente führt, wobei das Antriebssystem einen Stromkreis (21) mit einem Widerstand (22) und einen elektrischen Schalter (23) umfasst, mit dem die elektrische Maschine (9) mit dem Stromkreis (21) und dem Widerstand (22) verbunden werden kann, **dadurch gekennzeichnet, dass**
der elektrische Schalter (23) so konfiguriert ist, dass er während eines Startvorgangs des Fahrzeugs (1) manuell in eine Position bewegt wird, in der er den Stromkreis (21) mit der elektrischen Maschine verbindet, wenn der hybride Energiespeicher (20) eine unerwünschte Funktion haben soll, wobei das Antriebssystem ein Anzeigeelement (25) umfasst, das anzeigt, wenn der hybride Energiespeicher (20) eine unerwünschte Funktion haben soll.

2. Antriebssystem nach Anspruch 1, wobei die elektrische Schaltung (21) einen variablen Widerstand (22) umfasst.

3. Antriebssystem nach Anspruch 2, wobei die Steuereinheit (18) geeignet ist, den variablen Widerstand (22) so anzusteuern, dass das Fahrzeug während eines Startvorgangs des Fahrzeugs (1) eine gewünschte Geschwindigkeitserhöhung aufweist.

4. Antriebssystem nach einem der vorhergehenden Ansprüche, wobei das Antriebssystem eine Motorsteuerungsfunktion (26) und eine Steuereinheit (18) umfasst, die dazu eingerichtet ist, den Verbrennungsmotor (1) mit Hilfe der Motorsteuerungsfunktion (26) bei Betriebsanlässen zu steuern, wenn Gänge im Fahrzeug (1) geschaltet werden.

5. Antriebssystem nach einem der vorhergehenden Ansprüche, wobei die Ausgangswelle (2a) des Verbrennungsmotors mit dem Sonnenrad (10) des Planetengetriebes verbunden ist, dass die Eingangswelle (3a) des Getriebes mit dem Planetenradhalter (12) des Planetengetriebes verbunden ist und dass der Rotor (9b) der elektrischen Maschine mit dem Ringrad (11) des Planetengetriebes verbunden ist.

6. Verfahren zum Antreiben eines Fahrzeugs (1), wobei das Fahrzeug (1) einen Verbrennungsmotor (2) mit einer Ausgangswelle (2a), ein Getriebe (3) mit einer Eingangswelle (3a), eine elektrische Maschine (9), die einen Stator (9a) und einen Rotor (9b) umfasst, und ein Planetengetriebe, das ein Sonnenrad (10), ein Ringrad (11) und einen Planetenradhalter (12) umfasst, und einen hybriden Energiespeicher (20) umfasst, der mit der elektrischen Maschine (9) verbunden werden kann, so dass es möglich ist, elektrische Energie bei unterschiedlichen Betriebsbedingungen des Fahrzeugs (1) zu speichern bzw. zu verbrauchen, wobei die Ausgangswelle (2a) des Verbrennungsmotors mit einem ersten der Komponenten des Planetengetriebes verbunden ist, so dass eine Drehung dieser Welle (2a) zu einer Drehung dieser Komponente führt, wobei die Eingangswelle (3a) des Getriebes mit einer zweiten der Komponenten des Planetengetriebes verbunden ist, so dass eine Drehung dieser Welle zu einer Drehung dieser Komponente führt, und der Rotor (9b) der elektrischen Maschine mit einer dritten der Komponenten des Planetengetriebes verbunden ist, so dass eine Drehung des Rotors (9b) zu einer Drehung dieser Komponente führt, wobei das Verfahren ein Verbinden der elektrischen Maschine mit einem hybriden Energiespeicher (20) umfasst, so dass es möglich ist, elektrische Energie bei verschiedenen Betriebsbedingungen des Fahrzeugs (1) zu speichern bzw. zu verbrauchen, **dadurch gekennzeichnet, dass** das Verfahren ferner den Schritt umfasst, einem Fahrer des Fahrzeugs (1) über ein Anzeigeelement (25) anzuzeigen, wenn der hybride Energiespeicher (20) schätzungsweise eine unerwünschte Funktion hat, und den Schritt, bei manueller Betätigung des Fahrers die elektrische Maschine (9) mit einer elektrischen Schaltung (21) zu verbinden, die einen Widerstand (22) während mindestens eines Startvorgangs des Fahrzeugs (1) umfasst, wenn der hybride Energiespeicher (20) schätzungsweise eine unerwünschte Funktion hat.

7. Verfahren nach Anspruch 6, umfassend den Schritt, bei manueller Betätigung des Fahrers die elektrische Maschine (9) mit einem Stromkreis (21) zu verbinden, der einen variablen Widerstand (22) umfasst.

8. Verfahren nach Anspruch 7, das den Schritt umfasst, den variablen Widerstand (22) so zu steuern, dass er einen Widerstand bereitstellt, der dem Fahrzeug während eines Startvorgangs des Fahrzeugs (1) eine gewünschte Geschwindigkeitserhöhung verleiht.

9. Verfahren nach einem der Ansprüche 6 bis 8, das den Schritt umfasst, die Drehzahl des Verbrennungsmotors (1) zu Betriebsanlässen zu steuern, wenn die Gänge im Fahrzeug (1) geschaltet werden.

10. Verfahren nach einem der vorhergehenden Ansprüche 6 bis 9, das den Schritt umfasst, Informationen über einen Parameter zu erhalten, um festzustellen, ob der hybride Energiespeicher (20) eine unerwünschte Funktion hat.

11. Verfahren nach einem der vorhergehenden Ansprüche 6 bis 10, das die Schritte umfasst, die Ausgangswelle (2) des Verbrennungsmotors mit dem Sonnenrad (9) des Planetengetriebes zu verbinden, die Eingangswelle (3) des Getriebes mit dem Planetenradhalter (11) des Planetengetriebes zu verbinden und den Rotor (8) der elektrischen Maschine mit dem Ringrad (10) des Planetengetriebes zu verbinden.

12. Computerprogramm, das einen Computerprogrammcode umfasst, der so konfiguriert ist, dass er ein Verfahren nach einem der Ansprüche 6 bis 11 ausführt, wenn der Computerprogrammcode in einem Antriebssystem nach einem der Ansprüche 1 bis 5 ausgeführt wird.

13. Computerprogrammprodukt mit einem Datenspeichermedium, das von einem Computer lesbar ist, wobei der Computerprogrammcode eines Computerprogramms gemäß Anspruch 12 auf dem Datenspeichermedium gespeichert ist.

14. Fahrzeug mit einem Antriebssystem nach einem der Ansprüche 1 bis 5.

## Revendications

1. Système d'entraînement pour un véhicule (1), dans lequel le système d'entraînement comprend un moteur à combustion (2) avec un arbre de sortie (2a), une boîte de vitesses (3) avec un arbre d'entrée (3a), une machine électrique (9) qui comprend un stator (9a) et un rotor (9b), et un engrenage planétaire qui comprend une roue solaire (10), une roue annulaire (11) et un support de roue planétaire (12) et un stockage d'énergie hybride (20) qui peut se connecter à la machine électrique (9) de telle sorte qu'il est possible de stocker et consommer, respectivement, l'énergie électrique à différentes conditions de fonctionnement du véhicule (1), dans lequel l'arbre de sortie (2a) du moteur à combustion est connecté à un premier desdits composants de l'engrenage planétaire de telle sorte qu'une rotation de cet arbre (2a) entraîne une rotation de ce composant, dans lequel l'arbre d'entrée (3a) de la boîte de vitesses est connecté à un deuxième desdits composants de l'engrenage planétaire de telle sorte qu'une rotation de cet arbre entraîne une rotation de ce composant et le rotor (9b) de la machine électrique est connecté à un troisième desdits composants de l'engrenage planétaire de telle sorte qu'une rotation du rotor (9b) entraîne une rotation de ce composant, dans lequel le système d'entraînement comprend un circuit électrique (21) avec une résistance (22) et un commutateur électrique (23) avec lequel la machine électrique (9) est connectable au circuit électrique (21) et à la résistance (22), **caractérisé en ce que**
le commutateur électrique (23) est configuré pour être manuellement déplacé vers une position dans laquelle il connecte le circuit électrique (21) à la machine électrique pendant un processus de démarrage du véhicule (1) lorsque le stockage d'énergie hybride (20) est estimé avoir une fonction indésirable, le système d'entraînement comprenant un organe d'indication (25) qui indique quand le stockage d'énergie hybride (20) est estimé avoir une fonction indésirable.

2. Système d'entraînement selon la revendication 1, dans lequel le circuit électrique (21) comprend une résistance variable (22).

3. Système d'entraînement selon la revendication 2, dans lequel l'unité de commande (18) est adaptée pour commander la résistance variable (22) de telle sorte que le véhicule fournit une augmentation de vitesse souhaitée pendant un processus de démarrage du véhicule (1).

4. Système d'entraînement selon l'une quelconque des revendications précédentes, dans lequel le système d'entraînement comprend une fonction de commande de moteur (26) et une unité de commande (18) qui est adaptée pour commander le moteur à combustion (1) avec l'aide de la fonction de commande de moteur (26) à l'occasion d'un fonctionnement lorsque les vitesses sont changées dans le véhicule (1).

5. Système d'entraînement selon l'une quelconque des revendications précédentes, dans lequel l'arbre de sortie (2a) du moteur à combustion est connecté à la roue solaire (10) de l'engrenage planétaire, l'arbre d'entrée (3a) de la boîte de vitesses est connecté au support de roue planétaire (12) de l'engrenage planétaire et le rotor (9b) de la machine électrique est connecté à la roue annulaire (11) de l'engrenage planétaire.

6. Procédé de conduite d'un véhicule (1), dans lequel le véhicule (1) comprend un moteur à combustion (2) avec un arbre de sortie (2a), une boîte de vitesses (3) avec un arbre d'entrée (3a), une machine électrique (9) qui comprend un stator (9a) et un rotor (9b), et un engrenage planétaire qui comprend une roue solaire (10), une roue annulaire (11) et un support de roue planétaire (12) et un stockage d'énergie hybride (20) qui peut être connecté à la machine électrique (9) de telle sorte qu'il est possible de stocker et de consommer, respectivement, l'énergie électrique à différentes conditions de fonctionnement du véhicule (1), dans lequel l'arbre de sortie (2a) du moteur à combustion est connecté à un premier desdits composants de l'engrenage planétaire de telle sorte qu'une rotation de cet arbre (2a) entraîne une rotation de ce composant, dans lequel l'arbre d'entrée (3a) de la boîte de vitesses est connecté à un deuxième desdits composants de l'engrenage planétaire de telle sorte qu'une rotation de cet arbre entraîne une rotation de ce composant et le rotor (9b) de la machine électrique est connecté à un troisième desdits composants de l'engrenage planétaire de telle sorte qu'une rotation du rotor (9b) entraîne une rotation de ce composant, ledit procédé comprenant la connexion de la machine électrique à un stockage d'énergie hybride (20) de telle sorte qu'il est possible de stocker et de consommer, respectivement, l'énergie électrique à différentes conditions de fonctionnement du véhicule (1), **caractérisé en ce que** le procédé comprend en outre l'étape consistant à indiquer à un conducteur du véhicule (1) via un organe d'indication (25), lorsque le stockage d'énergie hybride (20) est estimé avoir une fonction indésirable, et l'étape consistant à connecter, lors de l'actionnement manuel du conducteur, la machine électrique (9) à un circuit électrique (21) qui comprend une résistance (22) pendant l'au moins un processus de démarrage du véhicule (1) lorsque le stockage d'énergie hybride (20) est estimé avoir une fonction indésirable.

7. Procédé selon la revendication 6, comprenant l'étape consistant à connecter, lors de l'actionnement manuel du conducteur, la machine électrique (9) à un circuit électrique (21) qui comprend une résistance variable (22).

8. Procédé selon la revendication 7, comprenant l'étape consistant à commander la résistance variable (22) de telle sorte qu'elle fournit une résistance qui donne au véhicule une augmentation de vitesse souhaitée pendant un processus de démarrage du véhicule (1).

9. Procédé selon l'une quelconque des revendications 6 à 8, comprenant l'étape consistant à commander la vitesse de rotation du moteur à combustion (1) à l'occasion d'un fonctionnement lorsque les vitesses sont changées dans le véhicule (1).

10. Procédé selon l'une quelconque des revendications précédentes 6 à 9, comprenant l'étape consistant à recevoir des informations concernant un paramètre afin de déterminer si le stockage d'énergie hybride (20) a une fonction indésirable.

11. Procédé selon l'une quelconque des revendications précédentes 6 à 10, comprenant les étapes consistant à connecter l'arbre de sortie (2) du moteur à combustion à la roue solaire (9) de l'engrenage planétaire, à connecter l'arbre d'entrée (3) de la boîte de vitesses au support de roue planétaire (11) de l'engrenage planétaire et à connecter le rotor (8) de la machine électrique à la roue annulaire (10) de l'engrenage planétaire.

12. Programme d'ordinateur comprenant un code de programme d'ordinateur configuré pour effectuer un procédé selon l'une quelconque des revendications 6 à 11, lorsque le code de programme d'ordinateur est exécuté dans un système d'entraînement selon l'une quelconque des revendications 1 à 5.

13. Produit de programme informatique comprenant un support de stockage de données qui est lisible par un ordinateur, dans lequel le code de programme informatique d'un programme informatique selon la revendication 12 est stocké sur le support de stockage de données.

14. Véhicule comprenant un système d'entraînement selon l'une quelconque des revendications 1 à 5.
